# EUROPÄISCHE PATENTSCHRIFT

(11) **EP 3 726 714 B1**
(45) Veröffentlichungstag und Bekanntmachung des Hinweises auf die Patenterteilung: **11.09.2024**
(21) Anmeldenummer: 20168772.0
(22) Anmeldetag: 08.04.2020
(51) Int. Cl.: H02M 1/44

(54) **NETZFILTERVORRICHTUNG FÜR EIN HAUSHALTSGERÄT, HAUSHALTSGERÄT SOWIE VERFAHREN**
MAINS FILTER DEVICE FOR A DOMESTIC APPLIANCE, DOMESTIC APPLIANCE, AND METHOD
DISPOSITIF DE FILTRE D4ALIMENTATION POUR UN APPAREIL ÉLECTROMÉNAGER, APPAREIL ÉLECTROMÉNAGER AINSI QUE PROCÉDÉ

(30) Priorität: 17.04.2019 DE 102019205623
(43) Veröffentlichungstag der Anmeldung: 21.10.2020
(73) Patentinhaber: BSH Hausgeräte GmbH, 81739 München (DE)
(72) Erfinder: Großer, Jörg, 93077 Bad Abbach (DE); Henke, Daniel, 93138 Lappersdorf (DE); Zaruba, Károly, 93089 Aufhausen (DE)

(56) Entgegenhaltungen:
- EP-A1- 2 466 606

## Beschreibung

Die vorliegende Erfindung betrifft eine Netzfiltervorrichtung für ein Haushaltsgerät. Die Netzfiltervorrichtung umfasst einen Eingang, welcher mit einer Stromversorgung elektrisch verbindbar ist und einen Ausgang, welcher mit elektrischen Komponenten des Haushaltsgeräts elektrisch verbindbar ist. Zudem umfasst die Netzfiltervorrichtung eine Filtereinrichtung zum Filtern von elektromagnetischen Störungen, wobei die Filtereinrichtung zumindest einen Kondensator aufweist. Außerdem umfasst die Netzfiltervorrichtung eine Schalteinrichtung und eine Steuereinrichtung zum Erkennen einer elektrischen Verbindung des Eingangs mit der Stromversorgung und zur Ansteuerung der Schalteinrichtung in Abhängigkeit von der elektrischen Verbindung des Eingangs mit der Stromversorgung. Darüber hinaus betrifft die vorliegende Erfindung ein Haushaltsgerät mit einer solchen Netzfiltervorrichtung. Schließlich betrifft die vorliegende Erfindung ein Verfahren zum Betreiben einer Netzfiltervorrichtung.

Haushaltsgeräte werden mit einer Stromversorgung eines Hauses elektrisch verbunden. Die Haushaltsgeräte umfassen üblicherweise eine Netzfiltervorrichtung beziehungsweise einen Netzfilter an dem Netzanschluss, um elektromagnetische Störungen, welche von den elektrischen Modulen und Komponenten innerhalb des Haushaltsgeräts während des Betriebs erzeugt werden, zu unterdrücken. Derartige Netzfiltervorrichtungen sind notwendig, um die elektromagnetische Kompatibilität sicherzustellen, sodass die Erfordernisse der entsprechenden Normen erfüllt sind. Die Netzfiltervorrichtungen umfassen üblicherweise eine Filtereinrichtung, welche einen oder mehrere Kondensatoren umfasst, die zwischen einem Außenleiter beziehungsweise Phasenleiter und einem Neutralleiter oder Nullleiter angeordnet sind. Diese Kondensatoren werden im Betrieb des Haushaltsgeräts auf den aktuellen Wert der Netzspannung geladen. Sobald der Netzstecker beispielsweise aus der Steckdose oder dem Wandanschluss abgezogen wird, liegt die Spannung der geladenen Filterkondensatoren an den Anschlüssen des Netzsteckers an. Diese Spannung kann zu einem elektrischen Schlag führen, wenn die Kontakte berührt werden.

Um diesem Problem zu entgegnen, sind aus dem Stand der Technik Netzfiltervorrichtungen bekannt, welche einen integrierten Schaltkreis zum Entladen der Filterkondensatoren aufweisen. Mit einem solchen Schaltkreis kann beispielsweise erkannt werden, wenn das Haushaltsgerät von der Stromversorgung getrennt wird. Falls diese Trennung erkannt wird, können die Filterkondensatoren unmittelbar mittels einer Stromsenke, beispielsweise einem elektrischen Widerstand oder einer Last, entladen werden. Der Nachteil eines derartigen Schaltkreises ist darin zu sehen, dass dieser mit elektrischer Energie versorgt werden muss, auch wenn sich das Haushaltsgerät in einem ausgestalteten Zustand oder einem Ruhezustand befindet. Ein weiterer Nachteil ergibt sich durch die Kosten der Komponenten der Schaltung.

Aus dem Stand der Technik sind ferner Netzfiltervorrichtungen für Haushaltsgeräte bekannt, welche einen Widerstand aufweisen, welcher parallel zu dem zumindest einen Filterkondensator geschaltet ist. In diesem Fall ist der Entladestrom auch dann vorhanden, wenn sich das Haushaltsgerät in dem Ruhezustand oder dem ausgestalteten Zustand befindet, wodurch beispielsweise der Energieverbrauch in dem Ruhezustand erhöht wird.

In diesem Zusammenhang beschreibt die EP 2 584 687 A2 einen Energieversorger für ein Haushaltsgerät umfassend eine Energieversorgung, um dem Energieversorger zugeführte Energie bereitzustellen, einen ersten Kondensator, der mit einer vorbestimmten Spannung geladen wird, die der zugeführten Leistung entspricht, einen Energiezustandsdetektor zum Erfassen eines Einschaltzustands oder eines Ausschaltzustands der Stromversorgung, eine erste Steuervorrichtung, um ein erstes Entladungssteuersignal zu erzeugen, das einen Signalpegel aufweist, der sich gemäß dem Zustand der Leistungsversorgung ändert, und um das Entladen der im ersten Kondensator geladenen vorbestimmten Spannung zu steuern, und einen Entlader, der parallel mit dem ersten Kondensator verbunden ist und die im ersten Kondensator geladene vorbestimmte Spannung als Reaktion auf das erste Entladungssteuersignal entlädt. Ferner offenbart die EP 2 466 606 A1 eine elektronische Schaltung für Haushaltsgeräte.

Es ist Aufgabe der vorliegenden Erfindung, eine Lösung aufzuzeigen, wie eine Netzfiltervorrichtung für ein Haushaltsgerät der eingangs genannten Art kostengünstig bereitgestellt werden kann und energieeffizient betrieben werden kann. Zudem soll ein entsprechendes Haushaltsgerät breitgestellt werden.

Diese Aufgabe wird erfindungsgemäß durch durch ein Haushaltsgerät mit einer Netzfiltervorrichtung gemäß Anspruch 1 sowie durch ein Verfahren zum Betreiben einer Netzfiltervorrichtung für ein Haushaltsgerät gemäß Anspruch 10 gelöst. Vorteilhafte Weiterbildungen sind in den abhängigen Ansprüchen definiert.

Eine erfindungsgemäße Netzfiltervorrichtung für ein Haushaltsgerät umfasst einen Eingang, welcher mit einer Stromversorgung elektrisch verbindbar ist. Darüber hinaus umfasst die Netzfiltervorrichtung einen Ausgang, welcher mit elektrischen Komponenten des Haushaltsgeräts elektrisch verbindbar ist. Ferner umfasst die Netzfiltervorrichtung eine Filtereinrichtung zum Filtern von elektromagnetischen Störungen, wobei die Filtereinrichtung zumindest einen Kondensator aufweist. Des Weiteren umfasst die Netzfiltervorrichtung eine Schalteinrichtung. Ferner umfasst die Netzfiltervorrichtung eine Steuereinrichtung zum Erkennen einer elektrischen Verbindung des Eingangs mit der Stromversorgung und zur Ansteuerung der Schalteinrichtung in Abhängigkeit von der elektrischen Verbindung des Eingangs mit der Stromversorgung. Dabei ist die Schalteinrichtung dazu ausgebildet, eine elektrische Verbindung zwischen dem Eingang und der Filtereinrichtung zu steuern.

Die Netzfiltervorrichtung kann in einem Haushaltsgerät verwendet werden. Unter einem Haushaltsgerät wird ein Gerät verstanden, das zur Haushaltsführung eingesetzt wird. Derartige Geräte sind auch unter dem Begriff "Weiße Ware" bekannt. Das kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät, wie beispielsweise ein Kühlschrank, ein Gefrierschrank oder eine Kühlgefrierkombination. Das Hausgerät kann aber auch ein Haushaltskleingerät sein, wie beispielsweise ein Warmwasserbereiter, ein Kaffeevollautomat, eine Küchenmaschine oder ein Staubsauger. Die Netzfiltervorrichtung kann Teil des Haushaltsgeräts sein. Beispielsweise kann die Netzfiltervorrichtung in einem Gehäuse des Haushaltsgeräts angeordnet sein. Die Netzfiltervorrichtung umfasst den Eingang, der mit der Stromversorgung des Hauses elektrisch verbunden werden kann. Mittels der Stromversorgung kann eine Netzspannung bereitgestellt werden. Der Eingang kann beispielsweise mit einem Netzstecker oder Netzanschluss des Haushaltsgeräts verbunden werden. Das Haushaltsgerät kann in einem Haus oder Gebäude verwendet werden und dort mit der Stromversorgung mit elektrischer Energie versorgt werden. Dem Eingang kann ein Anschluss für den Außenleiter und den Neutralleiter oder Nullleiter der Stromversorgung zugeordnet sein. Der Ausgang der Netzfiltervorrichtung kann mit den elektrischen Komponenten oder elektrischen Modulen des Haushaltsgeräts verbunden werden. Bei den elektrischen Komponenten oder Modulen kann es sich um einen elektrischen Antrieb, eine Heizeinrichtung, ein Steuergerät oder dergleichen handeln. Die Filtereinrichtung der Netzfiltervorrichtung kann zwischen dem Eingang und dem Ausgang angeordnet sein. Die Filtereinrichtung dient dazu, dass elektromagnetische Störungen, welche durch die elektrischen Komponenten und/oder Module während des Betriebs des Haushaltsgeräts verursacht werden, unterdrückt oder reduziert werden. Diese Störungen können an dem Ausgang vorhanden sein. Insbesondere soll verhindert werden, dass die elektromagnetischen Störungen in die Stromversorgung eingekoppelt werden. Die Filtereinrichtung weist zumindest einen Kondensator beziehungsweise Filterkondensator auf, welcher zwischen einem Anschluss für den Außenleiter und einem Anschluss für den Neutralleiter angeordnet sein kann. Wenn das Haushaltsgerät mit der Stromversorgung verbunden ist und in Betrieb ist, wird der zumindest eine Kondensator auf den aktuellen Wert der Netzspannung der Stromversorgung aufgeladen. Der zumindest eine Kondensator kann in einem Gehäuse der Netzfiltervorrichtung angeordnet sein.

Zudem weist die Netzfiltervorrichtung die Steuereinrichtung auf, mittels welcher erkannt werden kann, ob der Eingang der Netzfiltervorrichtung mit der Stromversorgung elektrisch verbunden ist. Insbesondere kann die Steuereinrichtung einen Mikrocontroller umfassen. Beispielsweise kann mittels der Steuereinrichtung überprüft werden, ob die Netzspannung der Stromversorgung an dem Eingang anliegt. Hierzu kann die Steuereinrichtung entsprechende Messwerte von einer Messeinrichtung empfangen, mittels welche die elektrische Spannung am Eingang gemessen werden kann. Zudem kann die Steuereinrichtung ein Steuersignal an die Schalteinrichtung ausgeben. Dieses Steuersignal kann beispielsweise in Form einer elektrischen Spannung ausgegeben werden. Beispielsweise kann mittels der Steuereinrichtung an der Schalteinrichtung eine elektrische Steuerspannung angelegt werden. In Abhängigkeit von der elektrischen Verbindung zwischen dem Eingang mit der Stromversorgung kann die Steuereinrichtung die Schalteinrichtung ansteuern.

Gemäß einem wesentlichen Aspekt der Erfindung ist vorgesehen, dass die Schalteinrichtung dazu ausgebildet ist, eine elektrische Verbindung zwischen dem Eingang und der Filtereinrichtung zu steuern. Beispielsweise kann die Schalteinrichtung zwischen dem Eingang und der Filtereinrichtung angeordnet sein. Auf diese Weise kann die Schalteinrichtung die Filtereinrichtung unmittelbar elektrisch von dem Eingang trennen, wenn dies erforderlich oder notwendig ist. Somit kann erreicht werden, dass der zumindest eine geladene Kondensator der Filtereinrichtung elektrisch von dem Eingang getrennt ist und dass eine Berührung des Netzsteckers des Haushaltsgeräts zu keinem Stromschlag führen kann. Zusätzlich kann eine Stromsenke beziehungsweise ein Widerstand eingesetzt werden, um den Kondensator zu entladen. Somit kann die Netzfiltervorrichtung kostengünstig bereitgestellt werden. Des Weitern kann die Netzfiltervorrichtung energieeffizient betrieben werden.

Weiterhin ist die Steuereinrichtung dazu ausgebildet ist, einen Betriebszustand des Haushaltsgeräts zu erfassen und die Schalteinrichtung in Abhängigkeit von dem erfassten Betriebszustand anzusteuern. Das Haushaltsgerät kann in unterschiedlichen Betriebszuständen oder Betriebsmodi betrieben werden. Als Betriebszustände können beispielsweise ein eingeschalteter Zustand, ein ausgeschalteter Zustand oder ein Ruhezustand vorgesehen sein. Dieser Ruhezustand kann auch als Stand-by-Zustand oder Stand-by-Betrieb bezeichnet werden. Die Steuereinrichtung kann entsprechende Signale empfangen, welche den aktuellen Betriebszustand des Haushaltsgeräts beschreiben. Diese Signale kann die Steuereinrichtung von einer entsprechenden Recheneinrichtung des Haushaltsgeräts empfangen, mittels welchem der Betrieb des Haushaltsgeräts gesteuert wird. Die Betriebszustände können durch eine Bedieneingabe eines Nutzers des Haushaltsgeräts und auch automatisch eingenommen werden. Hierbei ist nun vorgesehen, dass die Steuereinrichtung die Schalteinrichtung in Abhängigkeit von dem aktuellen Betriebszustand des Haushaltsgeräts ansteuern kann. Somit kann die Funktionalität der Netzfiltervorrichtung erweitert werden.

Ferner weist die Netzfiltervorrichtung eine Energieversorgungseinrichtung zum Versorgen der Steuereinrichtung mit elektrischer Energie auf. Mit der Energieversorgungseinrichtung kann das Steuergerät auch dann mit elektrischer Energie versorgt werden, falls der Eingang der Netzfiltervorrichtung elektrisch von der Stromversorgung getrennt ist. Die Energieversorgungseinrichtung weist einen Kondensator oder anderen elektrischen Energiespeicher auf. Dieser Energiespeicher kann bei der Verbindung des Eingangs der Netzfiltervorrichtung mit der Stromversorgung aufgeladen werden. Mittels der Energieversorgungseinrichtung kann beispielsweise die Steuereinrichtung mit elektrischer Energie versorgt werden, auch wenn die Schalteinrichtung geöffnet ist. Durch die Energieversorgungseinrichtung kann ein zuverlässiger und unabhängiger Betrieb der Steuereinrichtung garantiert werden.

Bevorzugt ist die Steuereinrichtung dazu ausgebildet, die Schalteinrichtung derart anzusteuern, dass die Filtereinrichtung elektrisch von dem Eingang getrennt ist, falls mittels der Erfassungseinrichtung erfasst wird, dass der Eingang von der Stromversorgung getrennt ist. Wenn beispielsweise der Netzstecker aus der Steckdose, welche der Stromversorgung zugeordnet ist, gezogen wird, ist der Eingang der Netzfiltervorrichtung von der Stromversorgung elektrisch getrennt. In diesem Fall ist es erforderlich, dass der Filterkondensator elektrisch von dem Eingang getrennt wird. Damit kann der Filterkondensator elektrisch auch von dem Netzstecker beziehungsweise den Anschlüssen des Steckers elektrisch getrennt werden. Auf diese Weise kann verhindert werden, dass bei der Berührung der Anschlüsse des Netzsteckers Personen oder Lebewesen durch einen Stromschlag zu Schaden kommen. Dies ermöglicht einen sicheren Betrieb der Netzfiltervorrichtung und des Haushaltsgeräts.

In einer weiteren Ausführungsform ist die Steuereinrichtung dazu ausgebildet, die Schalteinrichtung derart anzusteuern, dass die Filtereinrichtung elektrisch mit dem Eingang verbunden ist, falls mittels der Erfassungseinrichtung erfasst wird, dass der Eingang mit der Stromversorgung verbunden ist. Im Betrieb des Haushaltsgeräts ist der Netzstecker des Haushaltsgeräts in die Steckdose, welche der Stromversorgung zugeordnet ist, eingesteckt. Dies bedeutet, dass der Eingang der Netzfiltervorrichtung elektrisch mit der Stromversorgung verbunden ist. In diesem Fall ist es erforderlich, dass mittels der Filtereinrichtung beziehungsweise dem zumindest einen Filterkondensator die elektromagnetischen Störungen, die von den elektrischen Komponenten des Haushaltsgeräts hervorgerufen werden, gefiltert werden. Auf diese Weise kann verhindert werden, dass diese elektromagnetischen Störungen in die Stromversorgung ein gekoppelt werden. Damit können die Anforderungen der entsprechenden Normen sowie gesetzliche Anforderungen erfüllt werden.

In einer weiteren Ausführungsform weist die Netzfiltervorrichtung eine Messeinrichtung zum Messen einer elektrischen Spannung an dem Eingang auf und die Steuereinrichtung dazu ausgebildet ist, die mit der Messeinrichtung gemessene Spannung zum Erkennen der Verbindung zwischen dem Eingang und der Stromversorgung mit einer Soll-Amplitude und/oder einer Soll-Frequenz zu vergleichen. Mittels der Messeinrichtung kann die elektrische Spannung am Eingang der Netzfiltervorrichtung gemessen werden. Beispielsweise kann die elektrische Spannung zwischen einem Anschluss, der einem Außenleiter zugeordnet ist, und einem Anschluss, der dem Neutralleiter zugeordnet ist, gemessen werden. Es kann ferner vorgesehen sein, dass die gemessene elektrische Spannung entsprechend abgetastet wird beziehungsweise digitalisiert wird. Hierzu kann ein entsprechender Analog-Digital-Wandler genutzt werden, wobei eine Abtastfrequenz deutlich höher sein kann als die Netzfrequenz der Netzspannung aus der Stromversorgung. Auf Grundlage der gemessenen Spannung beziehungsweise der abgetasteten Spannung kann ein Spannungswert bestimmt werden, der die Spannung an dem Eingang der Netzfiltervorrichtung beschreibt. Dieser Spannungswert kann dann mittels der Steuereinrichtung mit einem Referenzwert verglichen werden. Beispielweise kann die elektrische Spannung oder der Spannungswert mit einer Soll-Amplitude verglichen werden. Ferner kann überprüft werden, ob eine Frequenz der elektrischen Spannung beziehungsweise der Spannungswert einer Soll-Frequenz entspricht. Es kann auch vorgesehen sein, dass die Steuereinrichtung die Form der Spannung beziehungsweise den zeitlichen Verlauf der Spannung mit einem Soll-Verlauf vergleicht. Die Soll-Amplitude, die Soll-Frequenz und/oder der Soll-Verlauf können für die Netzspannung bestimmt sein. Es ist nur erforderlich, dass eine einzige elektrische Spannung gemessen wird, um die Verbindung zwischen dem Eingang und der Stromversorgung zu überprüfen. Somit kann auf einfache Weise überprüft werden, ob die elektrische Spannung aus der Stromversorgung an dem Eingang der Netzfiltervorrichtung anliegt.

Hierbei ist insbesondere vorgesehen, die Steuereinrichtung dazu ausgebildet ist, die Schalteinrichtung derart anzusteuern, dass die Filtereinrichtung elektrisch von dem Eingang getrennt ist, falls als der Betriebszustand ein Ruhezustand oder ausgeschalteter Zustand erfasst wird. Der ausgeschaltete Zustand des Haushaltsgeräts liegt beispielsweise vor, wenn das Haushaltsgerät nicht betrieben wird. Hierzu kann es in einem entsprechenden Bedienelement oder Schalter ausgeschaltet werden. Der Ruhezustand oder sogenannte Stand-by-Zustand liegt beispielsweise vor, wenn das Haushaltsgerät aktuell nicht betrieben wird, aber für entsprechende Bedieneingaben zur Verfügung steht. Dieser Ruhezustand kann auch als Stromsparbetrieb bezeichnet werden. In dem ausgeschalteten Zustand und/oder dem Ruhezustand ist es wünschenswert, den Verbrauch an elektrischer Energie zu minimieren. Da ist es vorgesehen, bei diesen Betriebszuständen den zumindest einen Filterkondensator beziehungsweise die Filtereinrichtung elektrisch von dem Eingang zu trennen. Hier ist es insbesondere nicht vorgesehen, dass an der Schalteinrichtung ein elektrisches Signal angelegt wird.

Gemäß einer weiteren Ausführungsform ist die Steuereinrichtung dazu ausgebildet, die Schalteinrichtung derart anzusteuern, dass die Filtereinrichtung elektrisch mit dem Eingang verbunden ist, falls als der Betriebszustand ein aktivierter Zustand erfasst wird. Der aktivierte Zustand liegt beispielsweise vor, wenn das Haushaltsgerät betrieben wird.

In diesem Betriebszustand werden auch die elektrischen Komponenten oder Module des Haushaltsgeräts betrieben. Hierbei können auch die elektromagnetischen Störungen, die von den elektrischen Komponenten und/oder Modulen erzeugt werden, auftreten. Da ist es erforderlich, diese elektromagnetischen Störungen zu filtern.

Gemäß einer weiteren Ausführungsform weist die Schalteinrichtung ein Relais auf. Dieses Relais kann beispielsweise aktiviert werden, um den Eingang der Netzfiltervorrichtung elektrisch mit der Filtereinrichtung zu verbinden. Zudem kann das Relais deaktiviert werden, um den Eingang der Netzfiltervorrichtung elektrisch von der Filtereinrichtung zu trennen. Beim Aktivieren des Relais kann diesem elektrische Energie zugeführt werden. Wenn die Filtereinrichtung elektrisch von dem Eingang zu trennen ist, ist es nicht erforderlich, dem Relais elektrische Energie zuzuführen. Dies ermöglicht einen energiesparenden Betrieb der Netzfiltervorrichtung, insbesondere während des deaktivierten Zustands oder des Ruhezustands des Haushaltsgeräts.

Weiterhin ist vorteilhaft, wenn der zumindest eine Kondensator der Filtereinrichtung zwischen einem ersten Anschluss, welcher mit einem Außenleiter der Stromversorgung verbindbar ist, und einem zweiten Anschluss, welcher mit einem Neutralleiter der Stromversorgung verbindbar ist, angeordnet ist. Diese Anordnung des zumindest einen Kondensator beziehungsweise Filterkondensator es ermöglicht eine effiziente Filterung der elektromagnetischen Störungen. Es kann auch vorgesehen sein, dass die Filtereinrichtung mehrere Kondensatoren aufweist. Zudem kann es vorgesehen sein, dass die Filtereinrichtung zu dem zumindest eine Spule umfasst. Je Ausgestaltung der elektrischen Komponenten und/oder Module des Haushaltsgeräts und/oder der elektromagnetischen Störungen, welche durch diese Komponenten und/oder Module erzeugt werden, können die Komponenten der Filtereinrichtung ausgewählt und/oder angepasst werden.

Ein erfindungsgemäßes Haushaltsgerät umfasst eine erfindungsgemäße Netzfiltervorrichtung. Hierbei insbesondere vorgesehen, dass der Eingang der Netzfiltervorrichtung elektrisch mit einem Netzanschluss beziehungsweise Netzstecker des Haushaltsgeräts elektrisch verbunden ist. Dieser Netzanschluss oder Netzstecker kann dann mit der Stromversorgung des Hauses verbunden werden. Der Ausgang der Netzfiltervorrichtung kann mit den elektrischen Komponenten und/oder elektrischen Modulen des Haushaltsgeräts elektrisch verbunden werden. Des Weiteren kann das Haushaltsgerät einen entsprechenden Umrichter oder Gleichrichter aufweisen, um die elektrische Spannung der Stromversorgung entsprechend für den Betrieb der elektrischen Komponenten und/oder Module anpassen zu können.

Ein erfindungsgemäßes Verfahren dient zum Betreiben einer Netzfiltervorrichtung für ein Haushaltsgerät, wobei die Netzfiltervorrichtung einen Eingang, welcher mit einer Spannungsversorgung elektrisch verbindbar ist, einen Ausgang, welcher mit elektrischen Komponenten des Haushaltsgeräts elektrisch verbindbar ist, eine Filtereinrichtung, zum Filtern von elektromagnetischen Störungen, wobei die Filtereinrichtung zumindest einen Kondensator aufweist, umfasst. Bei dem Verfahren wird mittels einer Steuereinrichtung der Netzfiltervorrichtung eine elektrische Verbindung des Eingangs mit der Spannungsversorgung erkannt und in Abhängigkeit von der elektrischen Verbindung des Eingangs mit der Spannungsversorgung wird eine Schalteinrichtung der Netzfiltervorrichtung angesteuert. Hierbei ist vorgesehen, dass mittels der Schalteinrichtung eine elektrische Verbindung zwischen dem Eingang und der Filtereinrichtung gesteuert wird.

Die mit Bezug auf die erfindungsgemäße Netzfiltervorrichtung vorgestellten bevorzugten Ausführungsformen und deren Vorteile gelten entsprechend für das erfindungsgemäße Haushaltsgerät sowie für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die Erfindung wird nun anhand von bevorzugten Ausführungsbeispielen sowie unter Bezugnahme auf die beigefügten Zeichnungen näher erläutert. Dabei zeigen:
- Fig. 1: in einer stark vereinfachten Darstellung ein Haushaltsgerät, welches eine Netzfiltervorrichtung aufweist;
- Fig. 2: eine Netzfiltervorrichtung für ein Haushaltsgerät gemäß einer ersten Ausführungsform; und
- Fig. 3: eine Netzfiltervorrichtung für ein Haushaltsgerät gemäß einer zweiten Ausführungsform.

In den Figuren werden gleiche oder funktionsgleiche Elemente mit den gleichen Bezugszeichen versehen.

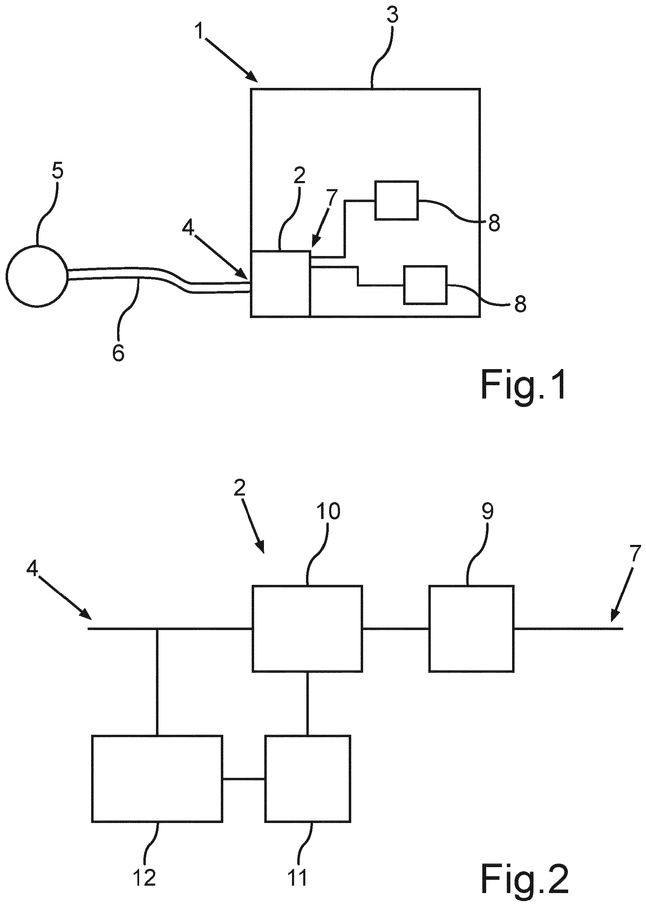

Fig.1 zeigt in einer stark vereinfachten, schematischen Darstellung ein Haushaltsgerät 1. Das Haushaltsgerät 1 kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät, wie beispielsweise ein Kühlschrank, ein Gefrierschrank oder eine Kühlgefrierkombination sein. Das Hausgerät 1 kann aber auch ein Haushaltskleingerät sein, wie beispielsweise ein Warmwasserbereiter, ein Kaffeevollautomat, eine Küchenmaschine oder ein Staubsauger.

Das Haushaltsgerät 1 umfasst eine Netzfiltervorrichtung 2, welche innerhalb eines Gehäuses 3 des Haushaltsgeräts 1 angeordnet ist. Die Netzfiltervorrichtung 2 umfasst einen Eingang 4, welcher mit einer Stromversorgung 5 elektrisch verbunden werden kann. Die Stromversorgung 5, welche vorliegend nur schematisch dargestellt ist, kann einem Haus oder Gebäude, in welchem sich das Haushaltsgerät 1 befindet, zugeordnet sein. Von der Stromversorgung 5 kann eine elektrische Spannung oder Netzspannung bereitgestellt werden. Diese Netzspannung kann beispielsweise 230 V betragen. Dabei kann der Eingang 4 der Netzfiltervorrichtung 2 elektrisch mittels eines Netzanschlusses 6 oder Netzsteckers mit der Stromversorgung 5 verbunden werden.

Darüber hinaus umfasst die Netzfiltervorrichtung 2 einen Ausgang 7, welcher mit elektrischen Komponenten 8 des Haushaltsgeräts 1 elektrisch verbunden ist. Die elektrischen Komponenten 8 können elektrische Antriebe, Steuereinrichtung, Recheneinrichtungen oder dergleichen sein. Dabei sind die elektrischen Komponenten 8 in dem Gehäuse 3 des Haushaltsgeräts 1 angeordnet. Vorliegend sind beispielhaft zwei elektrische Komponenten 8 dargestellt. Von diesen elektrischen Komponenten 8 werden im Betrieb des Haushaltsgeräts 1 elektromagnetische Störungen erzeugt. Mittels der Netzfiltervorrichtung 2 können diese elektromagnetischen Störungen gefiltert werden. Auf diese Weise kann verhindert werden, dass die Störungen in die Stromversorgung 5 eingespeist werden.

Fig. 2 zeigt die Netzfiltervorrichtung 2 gemäß einer ersten Ausführungsform in einer schematischen Darstellung. Die Netzfiltervorrichtung 2 umfasst eine Filtereinrichtung 9, welche zumindest einen Kondensator aufweist. Es kann auch vorgesehen sein, dass die Filtereinrichtung 9 mehrere Kondensatoren aufweist. Ferner kann die Filtereinrichtung 9 ein Filternetzwerk aus Kondensatoren und Spulen aufweisen. Dabei ist vorgesehen, dass der zumindest eine Kondensator zwischen einem Anschluss, welcher einem Außenleiter der Stromversorgung 5 zugeordnet ist, und einem Anschluss, welcher einem Neutralleiter der Stromversorgung 5 zugeordnet ist, geschaltet ist. Mittels der Filtereinrichtung 9 der Netzfiltervorrichtung 2 können die elektromagnetischen Störungen der elektrischen Komponenten gefiltert werden. Somit ist an dem Eingang 4 der Netzfiltervorrichtung 2 das gefilterte Signal vorhanden. Darüber hinaus umfasst die Netzfiltervorrichtung 2 eine Schalteinrichtung 10. Die Schalteinrichtung 10 ist vorliegend zwischen dem Eingang 4 und der Filtereinrichtung 9 angeordnet. Mittels der Schalteinrichtung 10 kann die elektrische Verbindung zwischen der Filtereinrichtung 9 und dem Eingang 4 geschaltet werden. Die Schalteinrichtung 10 kann ein Relais aufweisen.

Zudem umfasst die Netzfiltervorrichtung 2 eine Messeinrichtung 12, mittels welcher die elektrische Spannung am Eingang 4 gemessen werden kann. Somit kann die aktuelle Spannung am Eingang 4 ermittelt werden. Die Messeinrichtung 12 kann die elektrische Spannung am Eingang entsprechend abtasten und in digitaler Form an die Steuereinrichtung 11 übertragen. Die Steuereinrichtung 11 kann die gemessene Spannung mit entsprechenden Soll-Werten vergleich und somit überprüfen, ob die Netzspannung an dem Eingang anliegt. Falls keine elektrische Spannung an dem Eingang 4 anliegt und die Frequenz der Spannung nicht einer Soll-Frequenz beziehungsweise der Frequenz der Netzspannung entspricht, kann die Steuereinrichtung 11 erkennen, dass der Netzanschluss 6 von der Stromversorgung 5 getrennt wurde. In diesem Fall kann die Steuereinrichtung 11 die Schalteinrichtung 10 derart ansteuern, dass die elektrische Verbindung zwischen der Filtereinrichtung 9 und dem Eingang 4 getrennt wird. Hier wird die Schalteinrichtung 10 also geöffnet. Bei der Verbindung des Netzanschluss 6 mit der Stromversorgung 5 bleibt die Schalteinrichtung 10 geschlossen. Somit kann verhindert werden, dass elektromagnetische Störungen von den elektrischen Komponenten 8 an die Stromversorgung 5 übertragen werden.

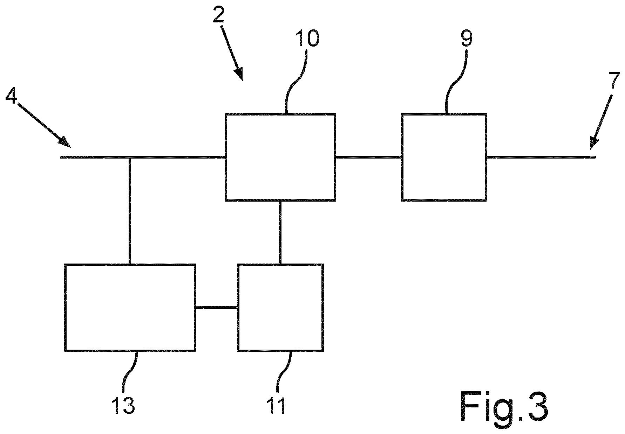

Fig. 3 zeigt die Netzfiltervorrichtung 2 gemäß einer zweiten Ausführungsform in einer schematischen Darstellung. Bei dieser Ausführungsform ist die Steuereinrichtung 11 ferner dazu ausgebildet, einen aktuellen Betriebszustand des Haushaltsgeräts 1 zu erfassen. Wenn sich das Haushaltsgerät 1 in einem aktivieren Betriebszustand befindet, kann die Steuereinrichtung 11 die Schalteinrichtung 10 so ansteuern, dass diese geschlossen ist und somit die Filtereinrichtung 9 mit dem Eingang 4 verbunden ist. Wenn sich das Haushaltsgerät 1 aber in einem ausgeschalteten Zustand oder einen Ruhezustand befindet, kann die Steuereinrichtung 11 die Schalteinrichtung 10 so ansteuern, dass diese geöffnet ist und somit die Filtereinrichtung 9 von dem Eingang 4 elektrisch getrennt ist. Somit kann Energie eingespart werden. Zudem umfasst die Netzfiltervorrichtung 2 im Vergleich zu der Netzfiltervorrichtung 2 gemäß Fig. 2 eine Energieversorgungseinrichtung 13 anstelle der Messeinrichtung 12. Diese Energieversorgungseinrichtung 13 dient dazu, die Steuereinrichtung 11 mit elektrischer Energie zu versorgen, auch wenn die Schalteinrichtung 10 geöffnet ist.

Die Ausgestaltungen der Netzfiltervorrichtungen 2, die in den Fig. 2 und 3 unabhängig voneinander beschrieben wurden, können auch kombiniert werden.

### Bezugszeichenliste

- 1: Haushaltsgerät
- 2: Netzfiltervorrichtung
- 3: Gehäuse
- 4: Eingang
- 5: Stromversorgung
- 6: Netzanschluss
- 7: Ausgang
- 8: elektrische Komponente
- 9: Filtereinrichtung
- 10: Schalteinrichtung
- 11: Steuereinrichtung
- 12: Messeinrichtung
- 13: Energieversorgungseinrichtung

## Patentansprüche

1. Haushaltsgerät (1) mit einer Netzfiltervorrichtung (2), wobei die Netzfiltervorrichtung (2) einen Eingang (4), welcher mit einer Spannungsversorgung (5) elektrisch verbindbar ist, einen Ausgang (7), welcher mit elektrischen Komponenten (8) des Haushaltsgeräts (1) elektrisch verbunden ist, eine Filtereinrichtung (9), zum Filtern von elektromagnetischen Störungen, wobei die Filtereinrichtung (9) zumindest einen Kondensator aufweist, eine Schalteinrichtung (10) und eine Steuereinrichtung (11) zum Erkennen einer elektrischen Verbindung des Eingangs (4) mit der Spannungsversorgung (5) und zur Ansteuerung der Schalteinrichtung (10) in Abhängigkeit von der elektrischen Verbindung des Eingangs (4) mit der Spannungsversorgung (5) umfasst, wobei die Schalteinrichtung (10) dazu ausgebildet ist, eine elektrische Verbindung zwischen dem Eingang (4) und der Filtereinrichtung (9) zu steuern,
wobei die Steuereinrichtung (11) dazu ausgebildet ist, einen Betriebszustand des Haushaltsgeräts (1) zu erfassen und die Schalteinrichtung (10) in Abhängigkeit von dem erfassten Betriebszustand anzusteuern, zu welchem Zweck die Steuereinrichtung (11) entsprechende Signale empfängt, welche den aktuellen Betriebszustand des Haushaltsgeräts (1) beschreiben,
**dadurch gekennzeichnet, dass**
die Steuereinrichtung (11) diese Signale von einer entsprechenden Recheneinrichtung des Haushaltsgeräts (1) empfängt, mittels welcher der Betrieb des Haushaltsgeräts gesteuert wird, wobei die Netzfiltervorrichtung (2) eine Energieversorgungseinrichtung (13) zum Versorgen der Steuereinrichtung (11) mit elektrischer Energie aufweist, zu welchem Zweck die Energieversorgungseinrichtung (13) einen Kondensator oder anderen elektrischen Energiespeicher aufweist.

2. Haushaltsgerät (1) nach Anspruch 1, **dadurch gekennzeichnet, dass** die Steuereinrichtung (11) dazu ausgebildet ist, die Schalteinrichtung (10) derart anzusteuern, dass die Filtereinrichtung (9) elektrisch von dem Eingang (4) getrennt ist, falls mittels der Steuereinrichtung (11) erfasst wird, dass der Eingang (4) von der Spannungsversorgung (5) getrennt ist.

3. Haushaltsgerät (1) nach Anspruch 1 oder 2, **dadurch gekennzeichnet, dass** die Steuereinrichtung (11) dazu ausgebildet ist, die Schalteinrichtung (10) derart anzusteuern, dass die Filtereinrichtung (9) elektrisch mit dem Eingang (4) verbunden ist, falls mittels der Steuereinrichtung (11) erfasst wird, dass der Eingang (4) mit der Spannungsversorgung (5) verbunden ist.

4. Haushaltsgerät (1) nach einem der vorhergehenden Ansprüche, **dadurch gekennzeichnet, dass** die Netzfiltervorrichtung (2) eine Messeinrichtung (12) zum Messen einer elektrischen Spannung an dem Eingang (4) aufweist und die Steuereinrichtung (11) dazu ausgebildet ist, die mit der Messeinrichtung (12) gemessene Spannung zum Erkennen der Verbindung zwischen dem Eingang (4) und der Spannungsversorgung (5) mit einer Soll-Amplitude und/oder einer Soll-Frequenz zu vergleichen.

5. Haushaltsgerät (1) nach Anspruch 1, **dadurch gekennzeichnet, dass** die Steuereinrichtung (11) dazu ausgebildet ist, die Schalteinrichtung (10) derart anzusteuern, dass die Filtereinrichtung (9) elektrisch von dem Eingang (4) getrennt ist, falls als der Betriebszustand ein Ruhezustand oder ausgeschalteter Zustand erfasst wird.

6. Haushaltsgerät (1) nach einem der Ansprüche 1 oder 5, **dadurch gekennzeichnet, dass** die Steuereinrichtung (11) dazu ausgebildet ist, die Schalteinrichtung (10) derart anzusteuern, dass die Filtereinrichtung (9) elektrisch mit dem Eingang (4) verbunden ist, falls als der Betriebszustand ein aktivierter Zustand erfasst wird.

7. Haushaltsgerät (1) nach einem der vorhergehenden Ansprüche, **dadurch gekennzeichnet, dass** die Schalteinrichtung (10) ein Relais aufweist.

8. Haushaltsgerät (1) nach einem der vorhergehenden Ansprüche, **dadurch gekennzeichnet, dass** der Kondensator der Filtereinrichtung (9) zwischen einem ersten Anschluss, welcher mit einem Außenleiter der Stromversorgung verbindbar ist, und einem zweiten Anschluss, welcher mit einem Neutralleiter der Stromversorgung verbindbar ist, angeordnet ist.

9. Haushaltsgerät (1) nach einem der vorhergehenden Ansprüche, **dadurch gekennzeichnet, dass** die Filtereinrichtung (9) zudem eine Spule umfasst.

10. Verfahren zum Betreiben einer Netzfiltervorrichtung (2) für ein Haushaltsgerät (1), wobei die Netzfiltervorrichtung (2) einen Eingang (4), welcher mit einer Spannungsversorgung (5) elektrisch verbindbar ist, einen Ausgang (7), welcher mit elektrischen Komponenten (8) des Haushaltsgeräts (1) elektrisch verbunden ist, eine Filtereinrichtung (9), zum Filtern von elektromagnetischen Störungen, wobei die Filtereinrichtung (9) zumindest einen Kondensator aufweist, umfasst, wobei bei dem Verfahren mittels einer Steuereinrichtung (11) der Netzfiltervorrichtung (2) eine elektrische Verbindung des Eingangs (4) mit der Spannungsversorgung (5) erkannt wird und in Abhängigkeit von der elektrischen Verbindung des Eingangs (4) mit der Spannungsversorgung (5) eine Schalteinrichtung (10) der Netzfiltervorrichtung (2) angesteuert wird, wobei mittels der Schalteinrichtung (10) eine elektrische Verbindung zwischen dem Eingang (4) und der Filtereinrichtung (9) gesteuert wird,
wobei mittels der Steuereinrichtung (11) ein Betriebszustand des Haushaltsgeräts (1) erfasst wird und die Schalteinrichtung (10) in Abhängigkeit von dem erfassten Betriebszustand angesteuert wird, zu welchem Zweck die Steuereinrichtung (11) entsprechende Signale empfängt, welche den aktuellen Betriebszustand des Haushaltsgeräts (1) beschreiben, **dadurch gekennzeichnet, dass**
die Steuereinrichtung (11) diese Signale von einer entsprechenden Recheneinrichtung des Haushaltsgeräts (1) empfängt, mittels welcher der Betrieb des Haushaltsgeräts gesteuert wird, wobei die Netzfiltervorrichtung (2) eine Energieversorgungseinrichtung (13) zum Versorgen der Steuereinrichtung (11) mit elektrischer Energie aufweist, zu welchem Zweck die Energieversorgungseinrichtung (13) einen Kondensator oder anderen elektrischen Energiespeicher aufweist.

## Claims

1. Household appliance (1) with a mains filter device (2), wherein the mains filter device (2) comprises an input (4), which can be electrically connected to a voltage supply (5), an output (7), which is electrically connected to electrical components (8) of the household appliance (1), a filter facility (9), for filtering electromagnetic interferences, wherein the filter facility (9) has at least one capacitor, a switching facility (10) and a control facility (11) for identifying an electrical connection between the input (4) and the voltage supply (5) and for activating the switching facility (10) as a function of the electrical connection of the input (4) with the voltage supply (5), wherein the switching facility (10) is embodied to control an electrical connection between the input (4) and the filter facility (9),
wherein the control facility (11) is embodied to detect an operating state of the household appliance (1) and to activate the switching facility (10) as a function of the detected operating state, for the purpose of which the control facility (11) receives corresponding signals which describe the current operating state of the household appliance (1),
**characterised in that** the control facility (11) receives these signals from a corresponding computing facility of the household appliance (1), by means of which the operation of the household appliance is controlled, wherein the mains filter device (2) has a power supply facility (13) for supplying the control facility (11) with electrical energy, for the purpose of which the power supply facility (13) has a capacitor or other electrical energy storage units.

2. Household appliance (1) according to claim 1, **characterised in that** the control facility (11) is embodied to activate the switching facility (10) so that the filter facility (9) is separated electrically from the input (4) if the control facility (11) detects that the input (4) is separated from the voltage supply (5).

3. Household appliance (1) according to claim 1 or 2, **characterised in that** the control facility (11) is embodied to activate the switching facility (10) such that the filter facility (9) is electrically connected to the input (4) if the control facility (11) detects that the input (4) is connected to the voltage supply (5).

4. Household appliance (1) according to one of the preceding claims, **characterised in that** the mains filter device (2) has a measuring facility (12) for measuring an electrical voltage at the input (4) and the control facility (11) is embodied to compare the voltage measured with the measuring facilty (12) in order to identify the connection between the input (4) and the voltage supply (5) with a target amplitude and/or a target frequency.

5. Household appliance (1) according to claim 1, **characterised in that** the control facility (11) is embodied to activate the switching facility (10) such that the filter facility (9) is separated electrically from the input (4) if a rest state or switched-off state is detected as the operating state.

6. Household appliance (1) according to one of claims 1 or 5, **characterised in that** the control facility (11) is embodied to activate the switching facility (10) such that the filter facility (9) is electrically connected to the input (4) if an activated state is detected as the operating state.

7. Household appliance (1) according to one of the preceding claims, **characterised in that** the switching facilty (10) has a relay.

8. Household appliance (1) according to one of the preceding claims, **characterised in that** the capacitor of the filter facility (9) is arranged between a first terminal, which can be connected to an external conductor of the power supply, and a second terminal, which can be connected to a neutral conductor of the power supply.

9. Household appliance (1) according to one of the preceding claims, **characterised in that** the filter facility (9) moreover comprises a coil.

10. Method for operating a mains filter device (2) for a household appliance (1), wherein the mains filter device (2) comprises an input (4), which can be electrically connected to a voltage supply (5), an output (7) which is electrically connected to electrical components (8) of the household appliance (1), a filter facilty (9), for filtering electromagnetic interferences, wherein the filter facility (9) has at least one capacitor, wherein with the method an electrical connection between the input (4) and the voltage supply (5) is identified by means of a control facility (11) of the mains filter device (2) and a switching facility (10) of the mains filter device (2) is activated as a function of the electrical connection between the input (4) and the voltage supply (5), wherein an electrical connection between the input (4) and the filter facility (9) is controlled by means of the switching facility (10),
wherein an operating state of the household appliance (1) is detected by means of the control facility (11) and the switching facility (10) is activated as a function of the detected operating state, for the purpose of which the control facility (11) receives corresponding signals which describe the current operating state of the household appliance (1), **characterised in that** the control facility (11) receives these signals from a corresponding computing facility of the household appliance (1), by means of which the operation of the household appliance is controlled, wherein the mains filter device (2) has a power supply facility (13) for supplying the control facility (11) with electrical energy, for the purpose of which the power supply facility (13) has a capacitor or other electrical energy storage units.

## Revendications

1. Appareil ménager (1) avec un dispositif de filtre réseau (2), dans lequel le dispositif de filtre réseau (2) présente une entrée (4), pouvant être reliée électriquement à une alimentation (5), une sortie (7), reliée électriquement à des composants électriques (8) de l'appareil ménager (1), un dispositif de filtre (9), pour filtrer les perturbations électromagnétiques, dans lequel le dispositif de filtre (9) présente au moins un condensateur, un dispositif de commutation (10) et un dispositif de commande (11) pour la détection d'une liaison électrique de l'entrée (4) avec l'alimentation (5) et pour la commande du dispositif de commutation (10) en fonction de la liaison électrique de l'entrée (4) avec l'alimentation (5), dans lequel le dispositif de commutation (10) est formé afin de commander une liaison électrique entre l'entrée (4) et le dispositif de filtre (9), dans lequel le dispositif de commande (11) est formé afin de détecter un état de fonctionnement de l'appareil ménager (1) et de commander le dispositif de commutation (10) en fonction de l'état de fonctionnement détecté, à laquelle fin le dispositif de commande (11) reçoit des signaux correspondants qui décrivent l'état de fonctionnement actuel de l'appareil ménager (1), **caractérisé en ce que** le dispositif de commande (11) reçoit ces signaux d'un dispositif de calcul correspondant de l'appareil ménager (1), au moyen duquel le fonctionnement de l'appareil ménager est commandé, dans lequel le dispositif de filtre réseau (2) présente un dispositif d'alimentation en énergie (13) pour l'alimentation du dispositif de commande (11) en énergie électrique, à laquelle fin le dispositif d'alimentation en énergie (13) présente un condensateur ou autre accumulateur d'énergie électrique.

2. Appareil ménager (1) selon la revendication 1, **caractérisé en ce que** le dispositif de commande (11) est formé afin de commander le dispositif de commutation (10) de telle sorte que le dispositif de filtre (9) est électriquement séparé de l'entrée (4), lorsqu'il est détecté au moyen du dispositif de commande (11) que l'entrée (4) est séparée de l'alimentation (5).

3. Appareil ménager (1) selon la revendication 1 ou 2, **caractérisé en ce que** le dispositif de commande (11) est formé afin de commander le dispositif de commutation (10) de telle sorte que le dispositif de filtre (9) est électriquement relié à l'entrée (4), dans l'hypothèse où il est détecté au moyen du dispositif de commande (11) que l'entrée (4) est reliée à l'alimentation (5).

4. Appareil ménager (1) selon l'une des revendications précédentes, **caractérisé en ce que** le dispositif de filtre réseau (2) présente un dispositif de mesure (12) pour la mesure d'une tension électrique à l'entrée (4) et le dispositif de commande (11) est formé afin de comparer la tension mesurée avec le dispositif de mesure (12) à une amplitude théorique et/ou à une fréquence théorique afin de détecter la liaison entre l'entrée (4) et l'alimentation (5).

5. Appareil ménager (1) selon la revendication 1, **caractérisé en ce que** le dispositif de commande (11) est formé afin de commander le dispositif de commutation (10) de telle sorte que le dispositif de filtre (9) est électriquement séparé de l'entrée (4) lorsqu'un état de repos ou un état éteint est détecté comme état de fonctionnement.

6. Appareil ménager (1) selon l'une des revendications 1 ou 5, **caractérisé en ce que** le dispositif de commande (11) est formé afin de commander le dispositif de commutation (10) de telle sorte que le dispositif de filtre (9) est électriquement relié à l'entrée (4) lorsqu'un état activé est détecté comme état de fonctionnement.

7. Appareil ménager (1) selon l'une des revendications précédentes, **caractérisé en ce que** le dispositif de commutation (10) présente un relais.

8. Appareil ménager (1) selon l'une des revendications précédentes, **caractérisé en ce que** le condensateur du dispositif de filtre (9) est disposé entre un premier raccordement, pouvant être relié à un conducteur externe de l'alimentation, et un deuxième raccordement, pouvant être relié à un conducteur neutre de l'alimentation.

9. Appareil ménager (1) selon l'une des revendications précédentes, **caractérisé en ce que** le dispositif de filtre (9) comprend en outre une bobine.

10. Procédé d'exploitation d'un dispositif de filtre réseau (2) pour un appareil ménager (1), dans lequel le dispositif de filtre réseau (2) comprend une entrée (4), pouvant être reliée électriquement à une alimentation (5), une sortie (7), reliée électriquement à des composants électriques (8) de l'appareil ménager (1), un dispositif de filtre (9), pour filtrer les perturbations électromagnétiques, dans lequel le dispositif de filtre (9) présente au moins un condensateur, dans lequel lors du procédé une liaison électrique de l'entrée (4) avec l'alimentation (5) est détectée au moyen d'un dispositif de commande (11) du dispositif de filtre réseau (2) et en fonction de la liaison électrique de l'entrée (4) avec l'alimentation (5), un dispositif de commutation (10) du dispositif de filtre réseau (2) est commandé, dans lequel une liaison électrique entre l'entrée (4) et le dispositif de filtre (9) est commandée au moyen du dispositif de commutation (10), dans lequel un état de fonctionnement de l'appareil ménager (1) est détecté au moyen du dispositif de commande (11) et le dispositif de commutation (10) est commandé en fonction de l'état de fonctionnement détecté, à laquelle fin le dispositif de commande (11) reçoit des signaux correspondants qui décrivent l'état de fonctionnement actuel de l'appareil ménager (1), **caractérisé en ce que** le dispositif de commande (11) reçoit ces signaux d'un dispositif de calcul correspondant de l'appareil ménager (1), au moyen duquel le fonctionnement de l'appareil ménager est commandé, dans lequel le dispositif de filtre réseau (2) présente un dispositif d'alimentation en énergie (13) pour l'alimentation du dispositif de commande (11) en énergie électrique, à laquelle fin le dispositif d'alimentation en énergie (13) présente un condensateur ou autre accumulateur d'énergie électrique.
